# EUROPÄISCHE PATENTANMELDUNG

(11) **EP 1 175 988 A1**
(43) Veröffentlichungstag der Anmeldung: **30.01.2002**
(21) Anmeldenummer: 00810677.5
(22) Anmeldetag: 28.07.2000
(51) Int. Cl.: B29C 45/26

(54) **Formwerkzeug mit zwei oder mehr Trennebenen und einer Vorrichtung zum Öffnen und Schliessen**

(71) Anmelder: Cipras Engineering AG, 4552 Derendingen (CH)
(72) Erfinder: Adam, Daniel, 4543 Deitingen (CH); Boss, Bruno, 4703 Kestenholz (CH); Rohrbach, Harald, 4563 Gerlafingen (CH)
(74) Vertreter: BOVARD AG - Patentanwälte

(57) **Zusammenfassung**

Die Öffnungsweite bekannter Formwerkzeuge wird durch Ansatzschrauben begrenzt, die jeweils in einer Formplatte eingeschraubt sind, die benachbarte Formplatte durchragen und mit ihrem Kopf in der letztgenannten Formplatte einen Anschlag bilden. Die Erfindung hat die Aufgabe, einen Klinkenzug vorzuschlagen, der neben der Funktion der Verriegelung der Formplatten auch die Funktion der Begrenzung der Öffnungseite der Formplatten (1,2,3,4) übernimmt, so dass auf Ansatzschrauben verzichtet werden kann. Zur Lösung dieser Aufgabe weist der Klinkenzug (10) eine mit einer ersten (1) Formplatte verbundene Steuerplatte (11), ein mit einer zweiten (2) Formplatte verbundenes Rastengehäuse (20) und eine mit einer dritten (3) Formplatte verbundene Zugleiste (13) auf. Das Rastengehäuse (20) hat eine Zuglasche (12) mit einer Öffnung (17), in der Steuerplatte (11) ist eine Ausnehmung (16) vorhanden ist und der Klinkenzug (10) enthält einen Winkel (14), der mit einer vierten Formplatte (4) verbunden ist und durch die Öffnung (17) der Zuglasche (12) hindurch in die Ausnehmung (16) ragt.

## Beschreibung

Die Erfindung betrifft ein Formwerkzeug mit relativ zueinander bewegbaren Formplatten, durch deren Bewegung das Formwerkzeug in mehr als einer Trennebene geöffnet und geschlossen wird, und mit mindestens einem Klinkenzug, der eine mit einer ersten Formplatte verbundene Steuerplatte, ein mit einer zweiten Formplatte verbundenes Rastengehäuse und eine mit einer dritten Formplatte verbundene Zugleiste enthält, wobei beim Öffnen des Formwerkzeugs das Rastengehäuse und die Zugleiste mit Hilfe von Rastkörpern so lange relativ zueinander festgehalten werden, bis sich die zweite Formplatte unter Öffnung einer ersten Trennebene um einen bestimmten Betrag von der ersten Formplatte entfernt hat und danach die Rastkörper die Zugleiste freigeben, so dass sich eine zweite Trennebene öffnet.

In Formwerkzeugen mit zwei oder mehr Trennebenen ist es bekannt, Klinkenzüge zur Steuerung der Formöffnung einzusetzen. Diese bekannten Klinkenzüge, die im Handel zum Beispiel unter der Bezeichnung Hasco 2174 erhältlich sind, halten eine Trennebene so lange verriegelt, bis die andere Trennebene geöffnet ist. Erst dann werden die miteinander verriegelten Formplatten freigegeben, so dass auch die andere Trennebene geöffnet werden kann. Als Anwendungsbeispiel seien sogenannte Drei-Platten-Werkzeuge genannt, bei denen sich während des Entformens der Anguss vom Spritzling löst und ausser der Haupttrennebene, durch welche der Spritzling aus der Spritzgiessform austreten kann, eine weitere Trennebene vorgesehen ist, aus der der Anguss austreten kann. Die bekannten Klinkenzüge werden üblicherweise am Formwerkzeug axialsymmetrisch paarweise gegenüberliegend angeordnet.

Gemäss dem bekannten Stand der Technik wird die maximale Öffnungsweite der Formplatten durch Ansatzschrauben begrenzt, die jeweils in einer Formplatte eingeschraubt sind, die benachbarte Formplatte durchragen und mit ihrem Kopf in der letztgenannten Formplatte einen Anschlag bilden.

Der Erfindung liegt die Aufgabe zugrunde, einen Klinkenzug vorzuschlagen, der neben der Funktion der Verriegelung der Formplatten auch die Funktion der Begrenzung der Öffnungsweite der Formplatten übernimmt.

Diese Aufgabe wird gemäss der Erfindung dadurch gelöst, dass das Rastengehäuse eine Zuglasche mit einer Öffnung aufweist, dass in der Steuerplatte eine Ausnehmung vorhanden ist und dass der Klinkenzug einen Winkel enthält, der mit einer vierten Formplatte verbunden ist und durch die Öffnung der Zuglasche hindurch in die Ausnehmung ragt, derart, dass nach dem Öffnen der ersten Trennebene die Zuglasche mit einem Rand ihrer Öffnung am Winkel anschlägt und diesen mitsamt der vierten Formplatte unter Öffnung einer dritten Trennebene mitnimmt, dass nach dem Öffnen der dritten Trennebene der Winkel an einem Rand der Ausnehmung anschlägt und dass nach dem Öffnen dieser dritten Trennebene die Rastkörper die Zugleiste zur Öffnung der zweiten Trennebene freigeben.

Die Vorteile der Erfindung gegenüber dem bekannten Stand der Technik bestehen insbesondere darin, dass auf die Ansatzschrauben verzichtet werden kann. Dies hat nicht nur einen geringeren Arbeits- und Kostenaufwand bei der Herstellung des Formwerkzeugs zur Folge, sondern führt auch dazu, dass im Formwerkzeug mehr nutzbare Arbeitsfläche verbleibt. Darüber hinaus lassen sich mit der Erfindung Formwerkzeuge mit vier beweglichen Formplatten und drei Trennebenen mit nur einem einzigen Paar von Klinkenzügen beherrschen. Gemäss dem bekannten Stand der Technik sind dazu mindestens zwei Paare von herkömmlichen Klinkenzügen und zudem in zwei der drei Trennebenen Ansatzschrauben notwendig. Da nach diesem Stand der Technik die Ansatzschrauben in der ersten Trennebene und die Ansatzschrauben in der benachbarten zweiten Trennebene gegeneinander axial versetzt sein müssen, ist der Gewinn an nutzbarer Arbeitsfläche durch die Erfindung noch beträchtlicher.

Wenn das Formwerkzeug nach einer besonderen Ausführungsart eine Spritzgiessform ist, können bei geöffnetem Werkzeug die Angussteile ungehindert herausfallen und bleiben nicht, wie es bei Spritzgiesswerkzeugen nach dem Stand der Technik oft vorkommt, an den Ansatzschrauben hängen.

Die Erfindung wird nachfolgend anhand eines Ausführungsbeispiels unter Bezugnahme auf die beiliegenden Zeichnungen beispielsweise erläutert. Es zeigt:
- Figur 1: eine schematische Seitenansicht einer Spritzgiessform in der geschlossenen Stellung,
- Figur 2: einen Schnitt durch die Form nach Figur 1 entlang ihrer Längsachse,
- Figur 3: die Form gemäss Figur 1 nach einem ersten Teilhub und in einem gegenüber Figur 1 vergrösserten Massstab,
- Figur 4: einen Längsschnitt durch die Form in der Stellung nach Figur 2, wobei nur die Hälfte der Form dargestellt ist,
- Figur 5: die Form nach einem zweiten Teilhub,
- Figur 6: einen Längsschnitt durch die Form in der Stellung nach Figur 5,
- Figur 7: die Form im ganz geöffneten Zustand und
- Figur 8: einen Längsschnitt durch die Form in der Stellung nach Figur 7,

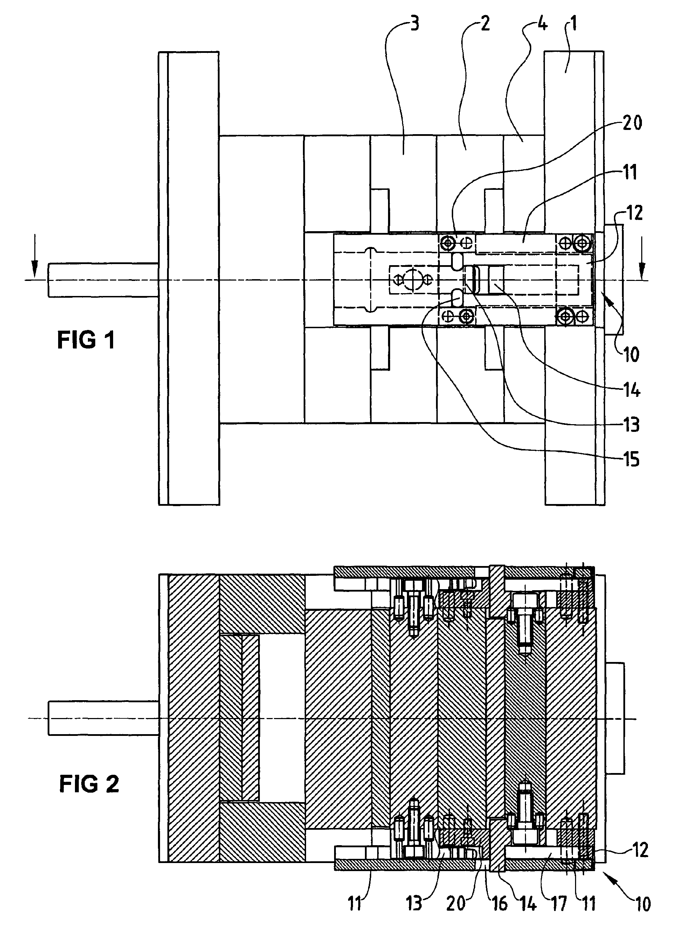

Die Figuren 1 und 2 zeigen schematisch eine Spritzgiessform in ihrer vollständig geschlossenen Stellung, wobei Figur 1 eine Seitenansicht und Figur 2 einen Längsschnitt darstellt. Vier Formplatten 1, 2, 3 und 4 sind relativ zueinander beweglich, wie dies nachstehend noch genauer erläutert wird. Die üblicherweise in einer Spritzgiessform vorhandenen Führungen, mit denen die gegeneinander beweglichen Formplatten geführt werden, sind hier nicht dargestellt, weil sie für das Verständnis der Erfindung unwichtig sind. Selbstverständlich kann jede der Formplatten aus mehreren Einzelteilen zusammengesetzt sein. Zwei Klinkenzüge 10 sind einander bezüglich der Längsachse symmetrisch gegenüberliegend seitlich an der Form angeordnet. Jeder Klinkenzug weist eine Steuerplatte 11 auf, die mit der ersten Formplatte 1 durch Schrauben und Stifte verbunden ist. An der zweiten Formplatte 2 ist eine Zuglasche 12 des Klinkenzuges 10 durch Schrauben und Stifte befestigt. In dieser Zuglasche ist ein Rastengehäuse 20 integriert, in welchem bewegliche Rastkörper 15 aufgenommen sind, deren Funktion später noch erläutert wird. Zu jedem Klinkenzug 10 gehört ferner eine Zugleiste 13, die mit der dritten Formplatte 3 durch Stifte und Schrauben verbunden ist. Auch mit der vierten Formplatte 4 ist auf jeder Seite ein zum Klinkenzug 10 gehörender Teil verbunden, nämlich ein Winkel 14, der mit der vierten Formplatte durch Stifte und Schrauben verbunden ist. Wie besonders deutlich in der Schnittdarstellung gemäss Figur 2 zu sehen ist, durchgreift dieser Winkel 14 sowohl eine langgezogene Öffnung 17 in der Zuglasche 12 als auch eine längliche Ausnehmung 16, die in der Steuerplatte 11 vorgesehen ist.

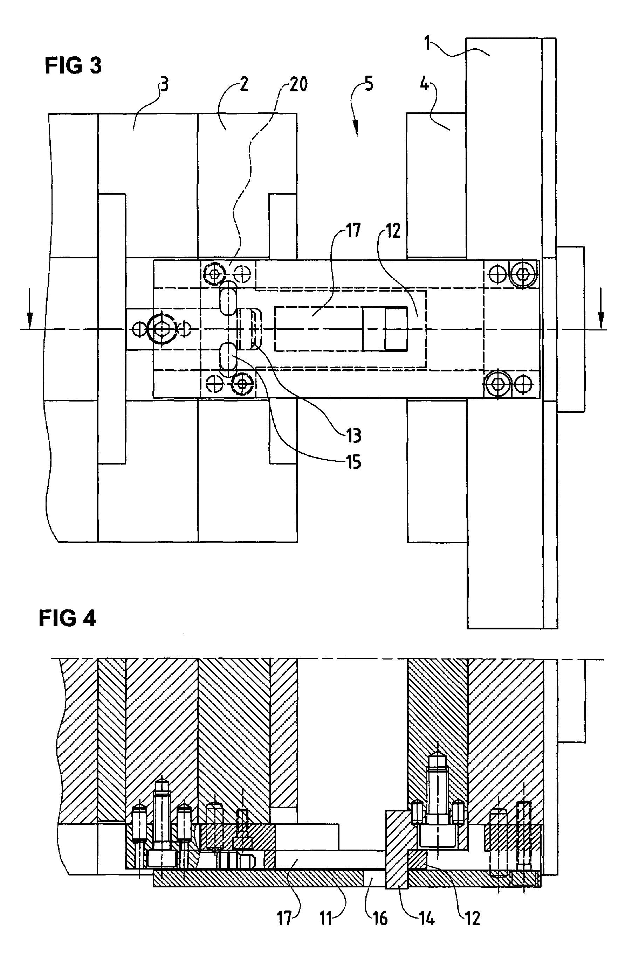

Ausgehend von der in den Figuren 1 und 2 dargestellten geschlossenen Stellung der Form wird nun anhand der Figuren 1 bis 8 die Funktion der Erfindung während des Öffnens der Form beschrieben. Mit einem ersten Hub, bei dem die zweite Formplatte und die dritte Formplatte 3 zusammen von der ersten Formplatte 1 in den Figuren nach links bewegt werden, öffnet sich zwischen der zweiten 2 und der vierten Formplatte 4 eine erste Trennebene 5. Die Figuren 3 und 4 zeigen die Form nach dem Ausführen dieses ersten Hubes. Die zweite 2 und die dritte Formplatte 3 können sich in dem Moment noch nicht voneinander trennen, weil die an der dritten Formplatte 3 befestigte Zugleiste 13 durch die in der Zuglasche 12 gelagerten Rastkörper 15 daran gehindert wird, sich aus der mit der Formplatte 2 verbundenen Zuglasche 12 zurückzuziehen. Mit dem Öffnen der ersten Trennebene 5 wird das Angusssystem vom (nicht dargestellten) Gussteil getrennt.

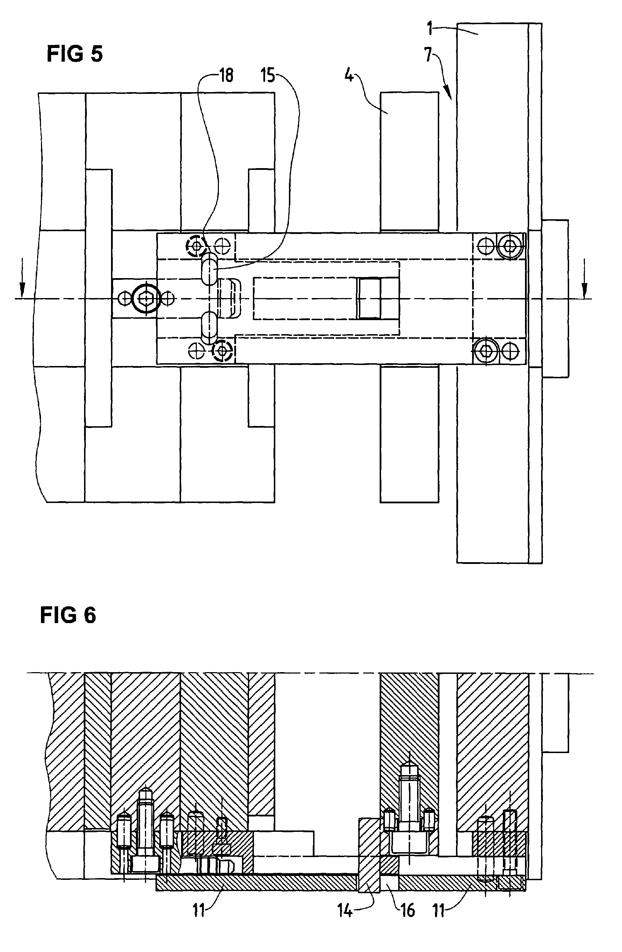

Wird die Bewegung, bei der sich die dritte Formplatte 3 von der ersten Formplatte 1 entfernt, fortgesetzt, bewegen sich die zweite 2 und die dritte Formplatte 3 gemeinsam in der Zeichnung nach links, weil sie immer noch wie oben beschrieben über die Zugleiste 13 und die Zuglasche 12 miteinander verbunden sind. Die mit diesem zweiten Hub einhergehende Relativbewegung zwischen der an der zweiten Formplatte 2 fixierten Zuglasche 12 und dem mit der vierten Formplatte 4 verbundenen Winkel 14 führt dazu, dass das in der Figur rechte Ende der langgezogenen Öffnung 17 der Zuglasche 12 am Winkel 14 ansteht und somit die vierte Formplatte 4 mitgenommen wird, so dass sich zwischen der vierten Formplatte 4 und der ersten Formplatte 1 eine zweite Trennebene 7 öffnet. Der Winkel 14 dient dabei gleichzeitig der Begrenzung des Hubs der vierten Formplatte 4, indem am in der Zeichnung linken Rand der Ausnehmung 16 in der Steuerplatte 11 ansteht. Die Figuren 5 und 6 zeigen die Form nach diesem zweiten Hub, welcher benutzt wird, um das nicht dargestellte Angusssystem von nicht dargestellten Rückziehern abzustreifen, die mit der ersten Formplatte 1 verbunden sind. Wie in Figur 5 besonders deutlich zu sehen ist, befinden sich nun die Rastkörper 15 im Bereich von in der Steuerplatte 11 vorgesehenen Ausnehmungen 18, in welche sie ausweichen können, wenn die Bewegung der Formplatten fortgesetzt wird.

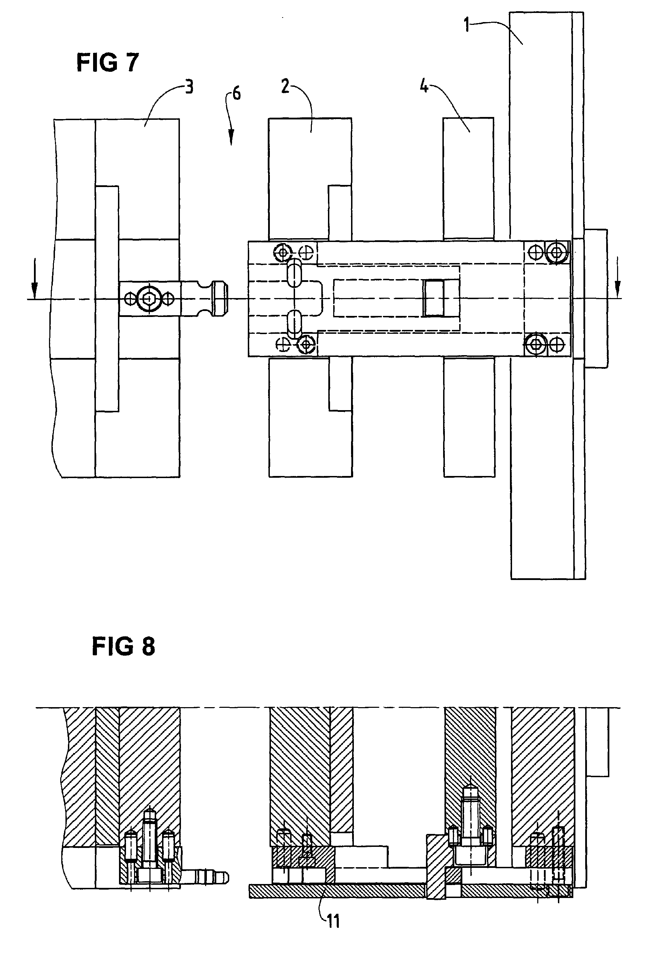

Durch die Bewegung der mit der dritten Formplatte 3 verbundenen Zugleiste 13, in der Figur nach links, aus der in den Figuren 5 und 6 dargestellten Lage werden die Rastkörper 15 in die Ausnehmungen 18 der Steuerplatte 11 gedrängt, so dass die dritte Formplatte 3 sich mit der Zugleiste 13 weiter nach links bewegen kann. Die zweite Formplatte 2 wird dabei durch den in die Öffnung 17 der Zuglasche 12 ragenden Winkel 14 zurückgehalten. In den Figuren 7 und 8 ist die Form vollständig geöffnet dargestellt.

Durch die beschriebene Gestaltung des Formwerkzeugs werden die beweglichen Formplatten durch die Klinkenzüge nicht nur in der gewünschten Abfolge bewegt, sondern jede der beweglichen Formplatten hat zwei definierte Endlagen, ohne dass dazu noch zusätzliche Bauteile wie Ansatzschrauben erforderlich sind.

## Patentansprüche

1. Formwerkzeug mit relativ zueinander bewegbaren Formplatten (1, 2, 3, 4), durch deren Bewegung das Formwerkzeug in mehr als einer Trennebene (5, 6, 7) geöffnet und geschlossen wird, und mit mindestens einem Klinkenzug (10), der eine mit einer ersten (1) Formplatte verbundene Steuerplatte (11), ein mit einer zweiten (2) Formplatte verbundenes Rastengehäuse (20) und eine mit einer dritten (3) Formplatte verbundene Zugleiste (13) enthält, wobei beim Öffnen des Formwerkzeugs das Rastengehäuse (20) und die Zugleiste (13) mit Hilfe von Rastkörpern (15) so lange relativ zueinander festgehalten werden, bis sich die zweite Formplatte (2) unter Öffnung einer ersten Trennebene (5) um einen bestimmten Betrag von der ersten Formplatte (1) entfernt hat und danach die Rastkörper (15) die Zugleiste (13) freigeben, so dass sich eine zweite (6) Trennebene öffnet, **dadurch gekennzeichnet, dass** das Rastengehäuse (20) eine Zuglasche (12) mit einer Öffnung (17) aufweist, dass in der Steuerplatte (11) eine Ausnehmung (16) vorhanden ist und dass der Klinkenzug (10) einen Winkel (14) enthält, der mit einer vierten Formplatte (4) verbunden ist und durch die Öffnung (17) der Zuglasche (12) hindurch in die Ausnehmung (16) ragt, derart, dass nach dem Öffnen der ersten Trennebene (5) die Zuglasche (12) mit einem Rand ihrer Öffnung (17) am Winkel (14) anschlägt und diesen mitsamt der vierten Formplatte (4) unter Öffnung einer dritten Trennebene (7) mitnimmt, dass nach dem Öffnen der dritten Trennebene der Winkel (14) an einem Rand der Ausnehmung (16) anschlägt und dass nach dem Öffnen dieser dritten Trennebene (7) die Rastkörper (15) die Zugleiste (13) zur Öffnung der zweiten Trennebene (6) freigeben.

2. Formwerkzeug nach Anspruch 1, **dadurch gekennzeichnet, dass** das Rastengehäuse (20) und die Zuglasche einstückig ausgebildet sind.

3. Formwerkzeug nach einem der vorhergehenden Ansprüche, **dadurch gekennzeichnet, dass** es eine Spritzgiessform ist.
